(19) Europäisches Patentamt
European Patent Office
Office européen des brevets

(11) Veröffentlichungsnummer: **0 014 889**
**B1**

# (12) EUROPÄISCHE PATENTSCHRIFT

(45) Veröffentlichungstag der Patentschrift: **29.12.82**

(51) Int. Cl.³: **H 01 F 1/06**

(21) Anmeldenummer: **80100557.0**

(22) Anmeldetag: **04.02.80**

(54) **Verfahren zur Herstellung nadelförmiger ferromagnetischer Eisenteilchen.**

(30) Priorität: **24.02.79 DE 2907255**

(43) Veröffentlichungstag der Anmeldung: **03.09.80 Patentblatt 80/18**

(45) Bekanntmachung des Hinweises auf die Patenterteilung: **29.12.82 Patentblatt 82/52**

(84) Benannte Vertragsstaaten: **DE FR GB NL**

(56) Entgegenhaltungen:
**FR-A-2 368 131**
**FR-A-2 385 476**

(73) Patentinhaber: **BASF Aktiengesellschaft, Carl-Bosch-Strasse 38, D-6700 Ludwigshafen (DE)**

(72) Erfinder: **Steck, Werner, Dr., Lorscher Strasse 3, D-6704 Mutterstadt (DE)**
Erfinder: **Rudolf, Peter, Dr., Wiesenstrasse 11, D-6701 Neuhofen (DE)**
Erfinder: **Huebner, Werner, Hauptstrasse 48c, D-6710 Frankenthal (DE)**
Erfinder: **Autzen, Horst, Dr., Hinter den Ruestern 20, D-6713 Freinsheim (DE)**
Erfinder: **Jakusch, Helmut, Dr., Lorscher Ring 6C, D-6710 Frankenthal (DE)**
Erfinder: **Schaefer, Dieter, Dr., Hauptstrasse 173, D-6731 Lindenberg (DE)**
Erfinder: **Vaeth, Guenter, Woogstrasse 35, D-6703 Limburgerhof (DE)**

**EP 0 014 889 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

# Verfahren zur Herstellung nadelförmiger ferromagnetischer Eisenteilchen

Die Erfindung betrifft ein Verfahren zur Herstellung nadelförmiger ferromagnetischer Eisenteilchen, welche sich durch eine enge Teilchengrößenverteilung und hohe Werte für Koerzitivkraft und spezifische Remanenz bei gleichzeitig hohem Verhältnis von spezifischer Remanenz zu spezifischer Sättigung auszeichnen, durch Reduktion nadelförmiger Eisenoxide mit gasförmigen Reduktionsmitteln.

Ferromagnetische Metallpulver und Metalldünnschichten sind wegen ihrer hohen Sättigungsmagnetisierung und der erreichten hohen Koerzitivkraft von besonderem Interesse für die Herstellung von magnetischen Aufzeichnungsträgern. Dies steht im Zusammenhang damit, daß sich auf diese Weise das Energieprodukt und die Informationsdichte erheblich steigern lassen, was unter anderem bedeutet, daß man mit solchen Aufzeichnungsmedien gegenüber dem jetzigen Standard schmälere Signalbreiten und bessere Signalamplituden erreichen kann.

Bei der Verwendung von nadelfömrigen ferromagnetischen Metallpulvern als magnetisierbare Materialien bei der Herstellung von magnetischen Aufzeichnungsträgern lassen sich im Gegensatz zu homogenen Metalldünnschichten zwar die mechanischen Eigenschaften solcher Informationsträger durch eine geeignete Auswahl der polymeren organischen Bindemittelsysteme in weiten Grenzen beeinflussen, jedoch sind dann außer an die magnetischen Eigenschaften noch weitere Anforderungen hinsichtlich Form, Größe und Dispergierbarkeit der Metallteilchen zu stellen.

Hohe Koerzitivkraft und hohe Remanenz sind bei Materialien für magnetische Speicherschichten Voraussetzung. Deshalb müssen die entsprechenden Metallteilchen magnetisches Einbereichsverhalten zeigen, außerdem sollte die vorhandene bzw. durch die magnetische Ausrichtung im Band zusätzlich erzielbare Anisotropie durch äußere Einwirkungen, wie z. B. Temperatur oder mechanische Belastung, nur wenig zu beeinträchtigen sein, d. h., die kleinen Teilchen sollten formanisotrop, im bevorzugten Fall nadelförmig sein, und sie sollten im allgemeinen in der Größe zwischen $10^2$ und $10^4$ Å liegen.

Es ist bekannt, Eisenteilchen der beschriebenen Art durch Reduktion feinverteilter nadelförmiger Eisenverbindungen, wie z. B. der Oxide, mit Wasserstoff oder einem anderen gasförmigen Reduktionsmittel herzustellen. Damit die Reduktion mit einer für die Praxis geeigneten Geschwindigkeit stattfindet, muß man sie bei Temperaturen von über 300° C durchführen. Dies bringt jedoch die Schwierigkeit mit sich, daß die gebildeten Metallteilchen sintern. Dadurch entspricht jedoch die Teilchenform nicht mehr derjenigen, wie sie für die magnetischen Eigenschaften erforderlich ist.

Zur Verminderung der Reduktionstemperatur wurde bereits vorgeschlagen, durch Aufbringen von Silber oder Silberverbindungen auf die Oberfläche von feinverteiltem Eisenoxid die Reduktion zu katalysieren (DE-OE 2 014 500). Ebenso ist die Behandlung des Eisenoxids mit Zinn(II)-chlorid beschrieben worden (DE-OS 1 907 691).

Die katalytische Beschleunigung der Reduktion von bevorzugt nadelförmigen Ausgangsverbindungen ergibt jedoch im allgemeinen weit kleinere Nadeln als das Ausgangsprodukt mit einem außerdem geringen Längen-/Dickenverhältnis. Das hat zur Folge, daß das Endprodukt ein ziemlich großes Teilchengrößenspektrum aufweist. So ist aber bekannt, daß die Teilchengrößenabhängigkeit von Koerzitivkraft und Remanenz bei magnetischen Stoffen in der Größenordnung der Einbereichsteilchen sehr stark ist. Kommen hierzu noch die Einflüsse, welche durch einen Anteil superparamagnetischer Teilchen auftreten, die als Bruchstücke bei der obengenannten Verfahrensweise entstehen können, dann sind solche magnetischen Materialien ungeeignet für den Einsatz bei der Herstellung magnetischer Aufzeichnungsträger. Bei solchen heterogenen Mischungen ist die magnetische Feldstärke, welche zum Ummagnetisieren der Teilchen nötig ist, sehr unterschiedlich, und auch die Verteilung der remanenten Magnetisierung als Funktion des angelegten äußeren Feldes ergibt eine wenig steile Remanenzkurve.

Eine weitere Ursache, welche zu den genannten Nachteilen führt, liegt in der Kristallform der für die Reduktion benutzten Eisenoxide begründet. So ist bekannt, daß die durch Ausfällung entstandenen Eisen(III)oxidhydroxide, insbesondere in seiner $\alpha$-Modifikation, zwar in Nadelform, jedoch leicht mit dendritischen Verwachsungen erhalten werden. Temperaturbehandlungen dieser Eisen(III)oxidhydroxide zur Stabilisierung der Kristalle bewirken somit auch eine Versinterung, insbesondere der dendritischen Kristallteile. Die aus solchen Materialien hergestellten Eisenteilchen besitzen dann nicht mehr das größtmögliche Längen-zu-Dickenverhältnis, wodurch auch bei der späteren Verwendung für magnetische Aufzeichnungsträger die Orientierbarkeit der Teilchen beeinträchtigt wird. Dendritische Materialien sind aber auch dann weniger geeignet, wenn durch zusätzliche Behandlungen oder durch eine entsprechende Begrenzung des Temperatureinflusses Versinterungen weitgehend vermieden werden, denn hier bilden sich aus den Dendriten, insbesondere nach der Reduktion zur Herstellung von Eisenteilchen, kleine Teilchen mit ungeeigneten Abmessungen, wodurch die Teilchengrößenverteilung ungünstig wird.

Es ist auch schon vorgeschlagen worden, bei der Herstellung ausgeprägt formanisotroper ferromagnetischer Eisenteilchen durch Reduktion von vorzugsweise Lepidokrokit mit Wasserstoff den

Lepidokrokit mit einem formstabilisierenden Oberflächenüberzug zu versehen (FR-A-2 385 476). Die dabei entstehenden Materialien konnten jedoch noch nicht voll die gestellten Anforderungen befriedigen.

Aufgabe der Erfindung war es daher, ein Verfahren zur Herstellung nadelförmiger ferromagnetischer Eisenteilchen bereitzustellen, mit welchem sich auf einfache und wirtschaftliche Weise gleichförmige, ausgeprägt formanisotorpe Teilchen erhalten lassen, die sich sowohl durch eine enge Teilchengrößenverteilung als auch durch hohe Werte für Koerzitivfeldstärke, Remanenz und Rechteckverhältnis auszeichnen.

Es wurde nun gefunden, daß sich nadelförmige ferromagnetische Eisenteilchen aus nadelförmigen, mit einem formstabilisierenden Oberflächenüberzug versehenen, aus Lepidokrokit und gegebenenfalls Goethit bestehenden Eisen(III)oxidhydroxid bei 275 bis 420°C durch Reduktion mit Wasserstoff mit dem gemäß der Aufgabe geforderten Eigenschaften herstellen lassen, wenn das eingesetzte nadelförmige Eisen(III)oxidhydroxid 15 bis 100 Gewichtsteile an Lepidokrokit und 0 bis 85 Gewichtsteile Goethit enthält und nach dem an sich bekannten Aufbringen des formstabilisierenden Oberflächenüberzugs und vor der Reduktion 0,5 bis 8 Stunden lang bei Temperaturen zwischen 400 und 750°C entwässert und getempert wird.

Besonders vorteilhaft ist es, wenn das nadelförmige Eisen(III)oxidhydroxid für das erfindungsgemäße Verfahren eine spezifische Oberfläche nach BET zwischen 20 und 75 $m^2/g$ und ein Längen-zu-Dickenverhältnis von mindestens 10, zweckmäßigerweise 10 bis 40, bei einer mittleren Teilchenlänge von 0,2 bis 1,5, bevorzugt 0,3 bis 1,2 um aufweist.

Diese speziellen Eisen(III)oxidhydroxide, bestehend aus 15 bis 100 Gewichtsteilen Lepidokrokit und 0 bis 85 Gewichtsteilen Goethit, lassen sich unter geeigneten Reaktionsbedingungen aus Eisen(II)salz-Lösungen mit Alkalien unter gleichzeitiger Oxidation herstellen. Als besonders zweckmäßig hat es sich erwiesen, aus einer wäßrigen Eisen(II)chloridlösung mittels Alkalien, wie Alkalihydroxiden oder Ammoniak, bei Temperaturen zwischen 10 und 36°C unter guter Rührung zur Erzeugung feiner Luftblasen Eisen(III)oxidhydrat-Keime bis zu einer Menge von 25 bis 60 Molprozent des eingesetzten Eisens zu bilden, aus denen dann anschließend bei einer Temperatur zwischen 25 und 70°C und bei einem durch Zusatz weiterer Alkalimengen eingestellten pH-Wert von 4,0 bis 5,8 unter intensiver Luftverteilung durch Zuwachs das Endprodukt entsteht. Nach beendetem Wachstum soll der Feststoffgehalt an Eisen(III)oxidhydroxid in der wäßrigen Suspension zwischen 10 und 70 g/l, bevorzugt bei 15 bis 65 g/l, liegen.

Die für das erfindungsgemäße Verfahren geeigneten nadelförmigen Eisen(III)oxidhydroxide werden vor der Temperaturbehandlung und Reduktion in bekannter Weise mit einem formstabilisierenden Oberflächenüberzug versehen, welcher am Erhalt der äußeren Form während der weiteren Umarbeitungsschritte mitwirken soll.

Hierzu geeignet ist die Behandlung der Eisen(III)oxidhydroxide mit einem Erdalkalikation und einer Carbonsäure bzw. einer anderen organischen Verbindung, welche mindestens zwei zur Chelatbildung mit dem Erdalkalikation befähigte Gruppierungen besitzt.

Zur Ausrüstung geeignete Carbonsäuren sind gesättigte oder auch ungesättigte aliphatische Carbonsäuren mit bis zu 6 Kohlenstoffatomen und bis zu 3 Säureresten, wobei ein oder mehrere Wasserstoffatome der aliphatischen Kette durch Hydroxy- oder Aminoreste substituiert sein können. Besonders geeignet sind Oxalsäure sowie Oxydi- und Oxytricarbonsäuren, wie Weinsäure oder Zitronensäure. Das gleichzeitig in äquivalenten Mengen mit der Carbonsäure auf die Eisen(III)oxidhydrate aufgebrachte Erdalkalikation wird aus der Gruppe Calcium, Barium, Strontium ausgewählt, wobei Barium jedoch bevorzugt wird.

Die Behandlung der nadelförmigen Teilchen geschieht vorteilhaft durch Dispergieren zusammen mit einer löslichen Erdalkali-Verbindung und der Carbonsäure in einem für die auf das Eisen(III)oxidhydrat-Gemenge aufzubringenden Substanzen geeigneten Lösungsmittel, welches sich anschließend leicht entfernen läßt. Mit Vorteil verwendet man Wasser oder niedere Alkohole. In einer anderen Ausführungsform wird zuerst ein Erdalkalisalz der Carbonsäure gebildet, das dann in Lösung der Feststoffsuspension zugegeben wird und durch anschließendes Abdampfen des Lösungsmittels auf die Teilchen aufgebracht wird.

Alternativ zu den genannten Carbonsäuren kann auf die Eisen(III)oxidhydroxidteilchen zusammen mit dem Erdalkalikation auch eine zur Bildung von Chelatkomplexen befähigte organische Verbindung aufgebracht werden. Entsprechende Verbindungen müssen mindestens zwei funktionale Gruppen aus der Reihe der primären, sekundären und tertiären Amino-, Imino-, Carbonyl-, Carboxyl- oder Hydroxyl-Reste aufweisen. Geeignete Substanzen sind $\beta$-Diketone mit mindestens einem Methylenwasserstoff zwischen den Carbonylgruppen der allgemeinen Formel

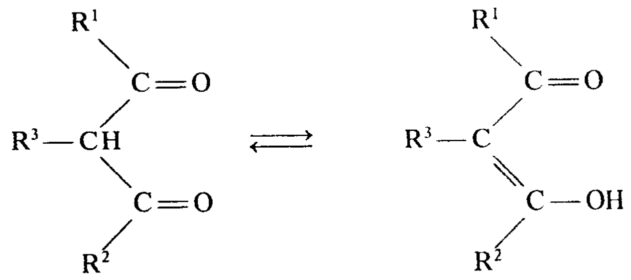

wobei $R^1$, $R^2$ eine Alkylgruppe mit 1 bis 24 C-Atomen oder Arylgruppe bedeuten und $R^3 = H$ oder wie $R^1$ sein kann, z. B. Acetylaceton, Methylacetylaceton, Äthylacetylaceton, Propylacetylaceton, Phenylacetylaceton, Propionylaceton, Dipropionylmethan, Benzoylaceton, Dibenzoylmethan, Methylbenzoylaceton, Methyldibenzoylmethan, β-Ketocarbonsäureester mit mindestens einem Methylenwasserstoff zwischen Keto- und Carboxylgruppe der allgemeinen Formel

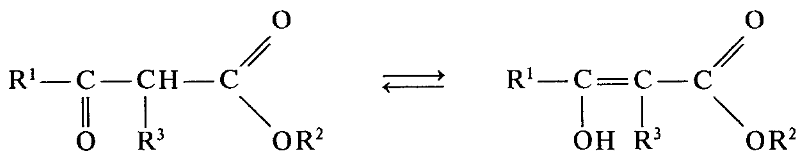

wobei $R^1$, $R^2$ und $R^3$ die genannte Bedeutung haben, wie z. B. Acetessigsäuremethylester, Acetessigsäureäthylester, -propylester, -isopropylester, -butylester, -isobutylester, -t-butylester, -amylester, -hexylester, -nonylester, -decylester, Aminoessigsäuren oder Aminopropionsäuren mit der allgemeinen Gruppe

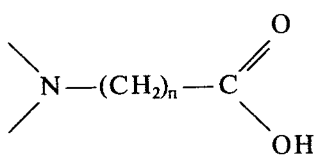

oder

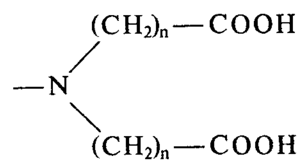

wobei n = 1 oder 2 ist, z. B. Äthylenidamintetraessigsäure, Äthylendiamintetrapropionsäure, Nitrilotriessigsäure, Iminodiessigsäure, Iminodipropionsäure, Melaminhexaessigsäure, Melaminhexapropionsäure oder deren Alkalisalze und auch Verbindungen mit der allgemeinen Gruppe

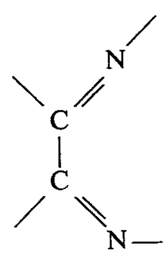

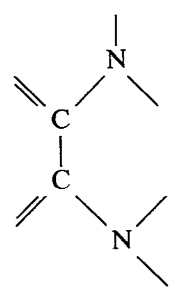

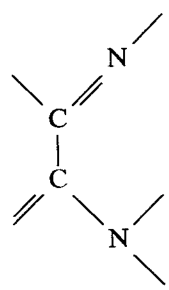

wie z. B. Dimethylglyoxim, Diaminoglyoxim, Benzildioxim, Bisimidazolinyl, Bis-tetrahydropryrimidinyl, α,α-Dipyridyl, Äthylendiamin, Diäthylentriamin, Triäthylentetramin.

Als besonders vorteilhaft hat sich bei der Verwendung von β-Diketonen das Acetylaceton, von β-Ketocarbonsäureestern der Acetessigester und von Aminosäuren die Äthylendiamintetraessigsäure als zur Chelatbildung geeignete Substanz herausgestellt.

Das Aufbringen des Erdalkalikations und der zur Chelatbildung befähigten organischen Verbindung geschieht in der gleichen Weise wie bei der Erdalkali/Carbonsäure-Behandlung ausgeführt.

Es hat sich als zweckmäßig herausgestellt, auf die Eisen(III)oxidhydroxide jeweils 0,2 bis 10, vorzugsweise 2 bis 8 Gewichtsprozent, bezogen auf die Menge des zu behandelnden Materials, an Erdalkali und Carbonsäure bzw. der angeführten organischen Verbindung aufzubringen.

Außerdem lassen sich die Eisen(III)oxidhydroxide an ihrer Oberfläche noch mit hydrolysebeständigen Sauerstoffsäuren des Phosphors, deren Salze oder Ester und aliphatischen ein- oder mehrbasischen Carbonsäuren formstabilisierend ausrüsten. Als hydrolysebeständige Substanzen kommen Phosphorsäure, lösliche Mono-, Di- oder Triphosphate wie Kalium-, Ammoniumdihydrogenphosphat, Dinatrium- oder Dilithium-ortho-phosphat, Trinatriumphosphat, Natriumpyrophosphat und Metaphosphate, wie Natriummetaphosphat, in Frage. Die Verbindungen können allein oder in Mischung untereinander angewandt werden. In vorteilhafter Weise lassen sich die Ester der

Phosphorsäure mit aliphatischen Monoalkoholen mit 1 bis 6 Kohlenstoffatomen, wie z. B. tert.-Butylester der Phosphorsäure einsetzen. Carbonsäuren im Rahmen des Verfahrens sind gesättigte oder auch ungesättigte aliphatische Carbonsäuren mit bis zu 6 C-Atomen und bis zu 3 Säuregruppen, wobei ein oder mehrere Wasserstoffatome der aliphatischen Kette durch Hydroxy- oder Aminoreste substituiert sein können. Besonders geeignet sind Oxidi- und Oxitricarbonsäuren, wie Oxalsäure, Weinsäure und Zitronensäure.

Zur Ausrüstung der Eisen(III)oxidhydroxide werden diese in Wasser oder wasserlöslichen organischen Lösungsmitteln, bevorzugt niedere aliphatische Alkohole, oder aber Mischungen dieser organischen Lösungsmittel mit Wasser, vorzugsweise jedoch in Wasser allein, durch intensives Rühren suspendiert. Dieser Suspension wird die entsprechende Phosphorverbindung und die Carbonsäure zugegeben. Die Reihenfolge der Zugabe ist dabei ohne Belang, auch können die Zusatzstoffe auch schon vor der Suspendierung des Eisenoxids im Lösungsmittel gelöst sein. Zur gleichmäßigen Verteilung wird nach der Zugabe noch einige Zeit, zweckmäßigerweise zwischen 10 und 60 Minuten, weitergerührt und anschließend filtriert und getrocknet. Die auf das Eisenoxid aufgebrachten Substanzen werden der Suspension in einer solchen Menge zugegeben, daß nach der Behandlung auf der Oberfläche des getrockneten Produkts eine 0,1 bis 2, vorzugsweise 0,2 bis 1,8 Gewichtsprozent Phosphor und 0,02 bis 1,2, vorzugsweise 0,04 bis 1 Gewichtsprozent Kohlenstoff, jeweils bezogen auf das Eisenoxid, entsprechende Menge an hydrolysebeständigen Sauerstoffsäuren des Phosphors, deren Salze oder Ester und aliphatischer Carbonsäuren vorhanden sind.

Die in der beschriebenen Weise formstabilisierend ausgerüsteten Eisen(III)oxidhydroxide werden nun gemäß dem erfindungsgemäßen Verfahren bei Temperaturen zwischen 400 und 750°C, vorzugsweise zwischen 430 und 680, an Luft oder unter Inertgas während 0,5 bis 8, zweckmäßigerweise 1 bis 6 Stunden entwässert und getempert. Nach dieser Behandlung weisen die für das erfindungsgemäße Verfahren geeigneten resultierenden Materialien eine spezifische Oberfläche nach BET zwischen 18 und 55, bevorzugt zwischen 20 und 50 $m^2/g$ auf.

Nach dem erfindungsgemäßen Verfahren werden die derart ausgerüstetn entwässerten und getemperten Eisen(III)oxidhydroxide, bestehend aus 15 bis 100 Gewichtsteilen Lepidokrokit und 0 bis 85 Gewichtsteilen Goethit, in an sich bekannter Weise mit Wasserstoff bei Temperaturen zwischen 275 und 420° C, vorzugsweise zwischen 300 und 400 zum Metall reduziert.

Die erfindungsgemäß hergestellten nadelförmigen ferromagnetischen Eisenteilchen zeichnen sich vor allem durch eine enge Teilchengrößenverteilung und hervorgehende magnetische Werte aus. Sie eignen sich insbesondere zur Verwendung als magnetisches Material bei der bekannten Herstellung von magnetischen Aufzeichnungsträgern.

Das erfindungsgemäße Verfahren wird nachfolgend anhand von Beispielen und Vergleichsversuchen erläutert.

Zur Charakterisierung der Eisen(III)oxidhydroxide dient in erster Linie die nach BET bestimmte Oberfläche $S_{N_2}$. Über das Aussehen und die Abmessungen (L/D-Verhältnis) der Eisenoxidhydroxid-Teilchen geben elektronenmikroskopische Aufnahmen Auskunft.

Die magnetischen Werte des Eisenpulvers wurden mit einem Schwingmagnetometer bei einm magnetischen Feld von 160 bzw. 800 kA/m gemessen. Die Werte der Koerzitivfeldstärke, $H_c$, gemessen in kA/m, wurden bei den Pulvermessungen auf eine Stopfdichte von $\varphi = 1{,}6$ g/cm bezogen. Spezifische Remanenz und Sättigung sind jeweils in $nTm^3/g$ angegeben.

Neben hoher Koerzitivkraft Hc und hoher Remanenz ist die sogenannte Remanenzkoerzitivkraft $H_R$ eine wichtige Beurteilungsgröße. Bei der Gleichfeldentmagnetisierung sind bei der Feldstärke $H_r$ bezüglich des Volumens die Hälfte der Teilchen ummagnetisiert. Damit stellt sie eine für Aufzeichnungsvorgänge charakteristische Größe dar, welche insbesondere den Arbeitspunkt bei der magnetischen Aufzeichnung bestimmt. Je uneinheitlicher die Remanenzkoerzitivkraft der jeweils einzelnen magnetischen Teilchen in der Aufzeichnungsschicht ist, desto breiter ist die Verteilung der magnetischen Felder, welche ein begrenztes Volumen der Aufzeichnungsschicht ummagnetisieren können. Dies wirkt sich besonders dann aus, wenn wegen hoher Aufzeichnungsdichten bzw. geringen Wellenlängen der Grenzbereich zwischen entgegengesetzt magnetisierten Bereichen möglichst schmal sein sollte. Für die Charakterisierung der Verteilung der Schaltfeldstärken der einzelnen Teilchen bestimmt man aus der Gleichfeldentmagnetisierungskurve einen Wert $h_5$ für die Gesamtbreite der Remanenzkurve und $h_{25}$ für die Steilheit der Remanenzkurve. Die Werte werden bestimmt nach

$$h_5 = \frac{H_{95} - H_5}{H_R} \quad \text{und} \quad h_{25} = \frac{H_{75} - H_{25}}{H_R}.$$

Der Zahlenindex beim Buchstaben H besagt, wieviel der Teilchen in Prozenten jeweils ummagnetisiert sind.

Beispiel 1

Für die weitere Verarbeitung werden wie nachfolgend beschrieben, Eisen(III)oxidhydroxid Proben A bis T wie in Tabelle 1 näher bezeichnet, hergestellt.

Zur Herstellung der Probe A werden in einem 26-l-Reaktionsgefäß 7,31 Mol $FeCl_2$ (926,6 g) mit VE-Wasser zu 9 l gelöst und bei gleichzeitigem Durchleiten von 500 l Stickstoff/h eine Temperatur von 18°C eingestellt. Unter Rühren mit 500 Upm werden dann in 30 bis 40 Minuten 7,38 Mol NaOH (295,2 g) gelöst in 4,5 l VE-Wasser hinzugefügt. Nach beendetem NaOH-Eintrag wird 10 Minuten nachgerührt und dann anstelle von Stickstoff je Stunde 150 l Luft eingeleitet bis der pH-Wert auf etwa 3,4 abgefallen ist. Nach 2,5 Stunden wurde auf diese Weise eine orangefarbene Keimsuspension erhalten. Unter weiterem Rühren mit 500 Upm und Durchleiten von 150 l Luft/h wird die Keimsuspension auf 40°C erwärmt. Nach Erreichen dieser Temperatur wird die Luftmenge auf 400 l/h erhöht und der pH-Wert durch Zulauf von wäßriger Natronlauge auf 5,0 bis 5,5 bis zum Reaktionsende gehalten. Nach 2 Stunden 40 Min. ist die Kristall-Bildung abgeschlossen. Der Niederschlag wird anschließend filtriert, mit Wasser so lange gewaschen bis das Filtrat chloridfrei ist und dann bei 130°C getrocknet.

Die Proben B bis T werden durch Änderung der Temperaturen in der Keimbildungsphase zwischen 18 und 28°C und in Aufwachsphase zwischen 35 und 50°C sowie durch Änderung des pH-Wertes in der Aufwachsphase zwischen 4 und 5,5 erhalten.

In der Tabelle 1 sind pH-Wert der FeOOH-Proben A bis T, prozentualer Goethit-Anteil des Niederschlags und spezifische Oberfläche des Endprodukts angegeben.

Tabelle 1

| Probe | pH-Wert im fertigen FeOOH | Gehalt an $\alpha$-FeOOH<br>% | Spezifische Oberfläche nach BET<br>$m^2/g$ |
|---|---|---|---|
| A | 6,9 | 3 | 38,0 |
| B | 5,1 | 0 | 24,9 |
| C | 5,4 | 2 | 28,4 |
| D | 4,1 | 5 | 32,9 |
| E | 6,3 | 0 | 35,2 |
| F | 3,8 | 26 | 37,9 |
| G | 4,8 | 12 | 35,1 |
| H | 4,8 | 2 | 40,6 |
| I | 5,1 | 2 | 44,8 |
| K | 5,5 | 2 | 55,0 |
| L | 4,7 | 0 | 64,5 |
| M | 2,4 | 12 | 69,4 |
| N | 4,4 | 0 | 74,7 |
| O | 4,1 | 51 | 38,3 |
| P | 4,3 | 33 | 39,1 |
| R | 6,7 | 84 | 29,0 |
| S | 6,0 | 3 | 26,9 |
| T | 7,4 | 6 | 49,4 |

Beispiel 2

100 Teile der Eisen(III)oxidhydroxid-Probe A werden unter intensivem Rühren in 800 Teilen Wasser suspendiert. Dazu wird eine Mischung von 0,7 Volumenteilen 85prozentige Phosphorsäure ($H_3PO_4$), 1 Teil kristallisierte Oxalsäure ($H_2C_2O_4 \cdot 2\ H_2O$) und 40 Teilen Wasser gegeben und noch 20 Minuten weitergerührt. Anschließend wird der Feststoff abfiltriert und bei 170°C an Luft getrocknet.

Dieses ausgerüstete Material wird nun bei den in Tabelle 2 aufgeführten Temperaturen während der ebenfalls angegebenen Zeitdauer behandelt. Die spezifische Oberfläche $S_{N_2}$ der ausgerüsteten, entwässerten und getemperten Zwischenprodukte ist ebenfalls in Tabelle 2 enthalten.

Im Anschluß an die Temperaturbehandlung werden die Zwischenprodukte im Wasserstoffstrom bei 350°C zum Metall reduziert. Die magnetischen Werte der Eisenteilchen sind in Tabelle 2 zusammengestellt.

Tabelle 2

| Zwischenprodukt | | | Eisenteilchen | | |
|---|---|---|---|---|---|
| Behandlung bei | | BET-Oberfläche | Magnetische Werte bei 160 kA/m | | |
| T [°C] | Zeit [h] | $S_{N_2}$ [$m^2/g$] | $H_{c\ (\rho=1,6)}$ [kA/m] | $M_{m/\rho}$ [$nTm^3/g$] | $\frac{Mr}{Mm}$ |
| 400 | 1 | 60,4 | 43,7 | 72 | 0,45 |
| 400 | 2 | 50,4 | 61,3 | 71 | 0,53 |
| 400 | 3 | 48,7 | 60,5 | 73 | 0,52 |
| 400 | 5 | 47,9 | 62,2 | 78 | 0,52 |
| 500 | 1 | 39,0 | 45,7 | 78 | 0,47 |
| 500 | 2 | 37,6 | 68,6 | 76 | 0,55 |
| 500 | 3 | 36,2 | 69,0 | 71 | 0,56 |
| 500 | 4 | 36,6 | 69,7 | 77 | 0,57 |
| 550 | 1 | 34,6 | 62,2 | 84 | 0,54 |
| 550 | 2 | 34,6 | 67,8 | 80 | 0,56 |
| 550 | 3 | 31,6 | 70,6 | 79 | 0,58 |
| 600 | 1 | 31,8 | 65,7 | 90 | 0,56 |
| 700 | 1 | 21,4 | 63,0 | 98 | 0,58 |
| 800 | 1 | 15,8 | 57,3 | 81 | 0,55 |

Beispiel 3

Ein gemäß Beispiel 2 ausgerüstetes und eine Stunde bei 600°C behandeltes und anschließend reduziertes Material wird in bekannter Weise durch Überleiten eines Luft-Stickstoffgemisches bei Temperaturen unter 50°C passiviert. Die damit erhaltenen Eisenteilchen weisen in einem Meßfeld von 800 kA/m eine Koerzitivfeldstärke von 99,9 kA/m, eine spezifische Sättigung von 198 $nTm^3/g$, ein Rechteckverhältnis von 0,48 und einen $h_{25}$-Wert von 0,57 auf.

Vergleichsversuch 1

Jeweils 100 Teile der Eisen(III)oxidhydroxid-Probe A von Beispiel 1 werden eine Stunde lang bei den in Tabelle 3 angegebenen Temperaturen entwässert und getempert und dann anschließend im Wasserstoffstrom bei 350°C zum Eisenpulver reduziert. Die erzielten spezifischen Oberflächen der

Proben nach der Temperaturbehandlung und magnetischen Werte der Eisenteilchen gemessen in einem Feld von 160 kA/m, sind in Tabelle 3 angegeben.

Vergleichsversuch 2

100 Teile der gemäß Vergleichsversuch 1 entwässerten und getemperten Eisen(III)oxidhydroxid-Proben A werden vor der Reduktion jeweils in 800 Teilen Wasser suspendiert, die Suspension mit einer Lösung von 0,7 Volumenteilen 85prozentiger Phosphorsäure ($H_3PO_4$) und 1 Teil kristallisierter Oxalsäure ($H_2C_2O_4 \cdot 2\,H_2O$) in 40 Teilen Wasser versetzt und nach 20 Minuten weiterem Rühren der Feststoff abfiltriert und bei 170°C an Luft getrocknet. Dieses Material wird dann wie in Vergleichsversuch 1 beschrieben zu Eisenpulver reduziert. Die dem Vergleichsversuch 1 entsprechenden Meßwerte sowie der Gehalt an Kohlenstoff und Phosphat der ausgerüsteten Proben sind in Tabelle 3 aufgeführt.

Tabelle 3

| Temperatur | Vergleichsversuch 1 | | | Vergleichsversuch 2 | | | | |
|---|---|---|---|---|---|---|---|---|
| | $S_{N_2}$ | $H_{c\,(\rho=1,6)}$ | $M_{r/\rho}$ | $S_{N_2}$ | $PO_4^{3-}$ [Gew.-%] | C [Gew.-%] | $H_{c\,(\rho=1,6)}$ | $M_{r/\rho}$ |
| 300 | 61,2 | 37,4 | 74 | 58,8 | 0,83 | 0,04 | 47,6 | 62 |
| 400 | 38,2 | 36,0 | 73 | 40,6 | 0,95 | 0,02 | 46,6 | 69 |
| 500 | 24,9 | 37,0 | 69 | 24,5 | 0,73 | 0,03 | 57,7 | 91 |
| 550 | 20,0 | 35,4 | 69 | 20,4 | 0,68 | 0,03 | 55,5 | 98 |
| 600 | 17,6 | 39,9 | 81 | 18,1 | 0,70 | 0,04 | 49,5 | 88 |
| 700 | 13,2 | 40,5 | 82 | 13,6 | 0,60 | 0,04 | 45,5 | 79 |

Beispiel 4

Jeweils 100 Teile der nach Beispiel 1 hergestellten Proben B bis R (siehe Tabelle 1) werden unter intensivem Rühren in 2000 Teilen Wasser suspendiert. Dann werden 0,7 Volumenteile 85prozentige Phosphorsäure und ein Teil kristallisierte Oxalsäure ($H_2C_2O_4 \cdot 2\,H_2O$), welche in 35 Teilen Wasser gelöst sind, zugesetzt und noch 10 Minuten gerührt. Nach dem Abfiltrieren des Feststoffs wird dieser bei 170° C an Luft getrocknet. Davon wird anschließend eine Hälfte bei 500° C und die andere Hälfte bei 650° C an Luft entwässert und getempert.

Jede der nun ausgerüsteten und bei 500 bzw. 650° C entwässerten und getemperten Proben B bis R wird wie in Beispiel 2 zum Metall reduziert. An den derart hergestellten Eisenteilchen wird die spezifische Oberfläche ($S_{N_2}$) und die magnetischen Werte bestimmt. Diese Meßwerte sind in Tabelle 4 aufgeführt.

Vergleichsversuch 3

Es wird wie in Beispiel 4 beschrieben verfahren, jedoch werden die mit Phosphorsäure und Oxalsäure ausgerüsteten Proben B bis R ohne vorherige Temperaturbehandlung reduziert. Die Meßergebnisse sind in Tabelle 4 angegeben.

Tabelle 4

| Probe | Beispiel 4 | | | | | | | | Vergleichsbeispiel 3 | | | |
|---|---|---|---|---|---|---|---|---|---|---|---|---|
| | 500°C | | | | 650°C | | | | ohne Temperaturbehandlung | | | |
| | $S_{N_2}$ | $H_{c\ (\rho=1,6)}$ | $\frac{Mr}{\rho}$ | $\frac{Mr}{Mm}$ | $S_{N_2}$ | $H_{c\ (\rho=1,6)}$ | $\frac{Mr}{\rho}$ | $\frac{Mr}{Mm}$ | $S_{N_2}$ | $H_{c\ (\rho=1,6)}$ | $\frac{Mr}{\rho}$ | $\frac{Mr}{Mm}$ |
| B | 37,6 | 57,0 | 80 | 0,58 | 20,6 | 57,1 | 89 | 0,59 | 28,3 | 55,6 | 83 | 0,56 |
| C | 35,0 | 62,5 | 77 | 0,56 | 24,7 | 58,1 | 91 | 0,60 | 30,9 | 57,4 | 81 | 0,54 |
| D | 35,7 | 65,8 | 70 | 0,55 | 25,5 | 64,5 | 74 | 0,56 | 35,0 | 58,7 | 81 | 0,53 |
| E | 40,1 | 63,8 | 72 | 0,56 | 29,3 | 64,7 | 85 | 0,59 | 37,6 | 56,3 | 56 | 0,50 |
| F | 46,0 | 52,0 | 53 | 0,43 | 28,6 | 59,1 | 63 | 0,49 | 37,1 | 45,5 | 50 | 0,39 |
| G | 40,1 | 65,5 | 79 | 0,55 | 28,3 | 65,0 | 85 | 0,56 | 35,8 | 61,7 | 77 | 0,53 |
| H | 39,0 | 61,5 | 77 | 0,57 | 32,5 | 62,9 | 77 | 0,60 | 45,8 | 59,3 | 89 | 0,57 |
| I | 39,7 | 65,4 | 76 | 0,58 | 26,5 | 62,4 | 84 | 0,58 | 57,1 | 60,7 | 80 | 0,54 |
| K | 52,1 | 62,6 | 69 | 0,51 | 31,9 | 62,9 | 80 | 0,56 | 54,9 | 59,4 | 69 | 0,51 |
| L | 44,1 | 55,2 | 84 | 0,54 | 27,2 | 60,7 | 88 | 0,56 | 73,8 | 50,4 | 80 | 0,49 |
| M | 24,3 | 28,0 | 38 | 0,27 | 21,5 | 57,2 | 64 | 0,49 | 73,5 | 7,5 | 6 | 0,04 |
| N | 45,7 | 28,2 | 39 | 0,25 | 25,9 | 65,8 | 80 | 0,55 | 78,8 | 26,1 | 36 | 0,23 |
| O | 42,0 | 58,7 | 98 | 0,56 | 27,2 | 59,7 | 71 | 0,56 | 39,6 | 57,5 | 83 | 0,54 |
| P | 49,1 | 62,3 | 68 | 0,53 | 29,7 | 67,0 | 80 | 0,56 | 39,1 | 62,3 | 78 | 0,52 |
| R | 44,0 | 63,4 | 86 | 0,58 | 26,5 | 61,5 | 95 | 0,59 | 54,5 | 59,1 | 85 | 0,55 |

Beispiel 5

5000 Teile der Eisen(III)oxidhydroxid-Probe S des Beispiels 1 werden in 40 000 Teilen Wasser unter intensivem Rühren suspendiert. Zu dieser Suspension wird eine Lösung von 35 Volumenteilen 85prozentige Phosphorsäure und 50 Teile kristallisierte Oxalsäure ($H_2C_2O_4 \cdot 2\,H_2O$) in 450 Teilen Wasser gegeben. Nach beendeter Dispergierung wird der Feststoff abfiltriert und bei 170°C an Luft getrocknet. Anschließend wird das Material bei 600°C entwässert und getempert. Das resultierende Produkt mit einer spezifischen Oberfläche von 30 $m^2/g$ wird dann in einem Drehrohrofen unter Stickstoff innerhalb von 6 Stunden auf 350°C aufgeheizt und bei dieser Temperatur im Wasserstoffstrom reduziert. Die pyrophoren Eisenteilchen werden daraufhin durch Überleiten eines Luft-Stickstoffgemisches bei einer Temperatur von 35°C passiviert. Die spezifische Oberfläche des Endproduktes liegt bei 19 $m^2/g$ und die in einem Meßfeld von 800 kA/m bestimmten magnetischen Werte sind

$H_c$ = 75,3 kA/m
$M_{R/\varrho}$ = 80 $nTm^3/g$
$M_{S/\varrho}$ = 183 $nTm^3/g$
$h_{25}$ = 0,59.

Beispiel 6

5000 Teile der Eisen(III)oxidhydroxid-Probe T des Beispiels 1 werden in 40 000 TEilen Wasser unter intensivem Rühren suspendiert. Zu dieser Suspension werden 200 Teile $Ba(OH)_2 \cdot 8\,H_2O$, in 5000 Teilen Wasser gelöst, und anschließend 250 Teile kristallisierte Oxalsäure ($H_2C_2O_4 \cdot 2\,H_2O$ gegeben. Nach beendeter Dispergierung wird der Feststoff abfiltriert und bei 120°C im Vakuum getrocknet. Daraufhin wird das Material bei 650°C entwässert und getempert, wie in Beispiel 5 beschrieben reduziert und die erhaltenen Eisenteilchen passiviert. Die spezifische Oberfläche des Endproduktes beträgt 29,2 $m^2/g$ und die in einem Meßfeld von 160 kA/m bestimmten magnetischen Werte sind

$H_c$ = 70,9 kA/m
$M_{r/\varrho}$ = 64 $nTm^3/g$
$M_{m/\varrho}$ = 115 $nTm^3/g$.

Beispiele 7 und 8

Jeweils 800 Teile der nach den Beispielen 5 und 6 hergestellten passivierten Eisenteilchen werden in einer 600 Volumenteile fassenden Stahlzylindermühle, welche 9000 Teile Stahlkugeln mit einem Durchmesser zwischen 4 und 6 mm enthält, mit 456 Teilen einer 13prozentigen Lösung eines thermoplastischen Polyesterurethans aus Adipinsäure, 1,4-Butandiol und 4,4'-Diisocyanatodiphenylmethan in einem Lösungsmittelgemisch aus gleichen Teilen Tetrahydrofuran und Dioxan, 296 Teile einer 10prozentigen Lösung eines Polyvinylformalbindemittels, enthaltend 82 Prozent Vinylformal-, 12 Prozent Vinylacetat- und 6 Prozent Vinylalkoholeinheiten, im genannten Lösungsmittelgemisch, 20 Teile Butylstearat und weitere 492 Teile des genannten Lösungsmittelgemisches gemischt und 4 Tage dispergiert. Sodann werden nochmals 456 Teile der angegebenen Polyesterurethan-Lösung, 296 Teile der eingesetzten Polyvinylformallösung, 271 Teile des Lösungsmittelgemisches sowie noch 2 Teile eines handelsüblichen Siliconöls zugegeben und weitere 24 Stunden dispergiert und durch eine Zellulose/Asbestfaserschicht filtriert. Auf einer üblichen Beschichtungsmaschine wird die so hergestellte Magnetdispersion auf eine Polyäthylenterephthalat-Trägerfolie von 11,5 µm Stärke aufgetragen und nach Durchlaufen eines magnetischen Richtfeldes innerhalb 2 Minuten bei 80 bis 100°C getrocknet. Die Magnetschicht wird durch Ziehen über beheizte und polierte Walzen bei Temperaturen von 60 bis 80°C geglättet und verdichtet. Die fertige Magnetschicht ist 3,5 µm dick. Die beschichtete Folie wird in Bänder von 3,81 mm Breite geschnitten.

Die elektroakustischen Eigenschaften dieser Bänder werden in Anlehnung an DIN 45 512 mit einem gegen das Standard-Bezugsband C 401 R umd 3 db höheren Arbeitpunkt gemessen. In der Tabelle 5 sind die Werte für die Aussteuerbarkeit bei 333 Hz($A_T$) und bei 10 kHz ($A_H$) gegenüber den Werten des Bezugsbandes angegeben. Außerdem sind in der Tabelle 5 noch der Richtfaktor RF, d. h. das Verhältnis aus remanenter Magnetisierung längs und quer zur Vorzugsrichtung, und der $h_{25}$-Wert aufgeführt.

Tabelle 5

| | Material von | $A_T$ | $A_H$ | RF | $h_{25}$ |
|---|---|---|---|---|---|
| Beispiel 7 | Bsp. 5 | +4,4 | +5,2 | 3,6 | 0,34 |
| Beispiel 8 | Bsp. 6 | +2,5 | +7,6 | 2,7 | 0,37 |

**Patentansprüche**

1. Verfahren zur Herstellung nadelförmiger ferromagnetischer Eisenteilchen aus nadelförmigen, mit einem formstabilisierenden Oberflächenüberzug versehenen aus Lepidokrokit und gegebenenfalls Goethit bestehenden Eisen(III)oxidhydroxid bei 275 bis 420°C durch Reduktion mit Wasserstoff, dadurch gekennzeichnet, daß das nadelförmige Eisen(III)oxidhydroxid 15 bis 100 Gewichtsteile an Lepidokrokit und 0 bis 85 Gewichtsteile Goethit enthält und nach dem an sich bekannten Aufbringen des formstabilisierenden Oberflächenüberzugs und vor der Reduktion 0,5 bis 8 Stunden lang bei Temperaturen zwischen 400 und 750°C entwässert und getempert wird.

2. Verfahren gemäß Anspruch 1, dadurch gekennzeichnet, daß das mit einem formstabilisierenden Oberflächenüberzug versehene Eisen(III)oxidhydroxid vor der Reduktion 1 bis 6 Stunden lang bei Temperaturen zwischen 430 und 680°C entwässert und getempert wird.

**Claims**

1. A process for the manufacture of acicular ferromagnetic iron particles of acicular iron(III) oxide hydroxide which consists of lepidocrodite and, optionally, goethite and is provided with a shape-stabilizing surface coating by reduction with hydrogen at 275° to 420°C, wherein the acicular iron(III) oxide hydroxide contains 15 to 100 percent by weight of lepidocrocite and 0 to 85 percent by weight of goethite and, after the application of the shape-stabilizing surface coating known per se and before reduction, is dehydrated and heat-treated for 0.5 to 8 hours at temperatures between 400° and 750°C.

2. A process as claimed in claim 1 wherein the iron(III) oxide hydroxide provided with a shape-stabilizing surface coating ist, prior to reduction, dehydrated and heat-treated for 1 to 6 hours at temperatures between 430° and 680°C.

**Revendications**

1. Procédé de préparation de particules de fer ferromagnétiques aciculaires, à partir d'oxydohydroxyde de fer (III), aciculaire, constitué de lepidocrocite et éventuellement de goethite, muni d'un revêtement superficiel stabilisant leur forme, entre 275 et 420°C, par réduction avec de l'hydrogène, caractérisé par le fait que l'oxydohydroxyde de fer (III) aciculaire contient 15 à 100 parties en poids de lepicocrodite et 0 à 85 parties en poids de goethite et, après l'application, connue en soi, du revêment superficiel stabilisant la forme, et, avant la réduction, est deshydraté et recuit, pendant 0,5 à 8 heures, à des températures entre 400 et 750°C.

2. Procédé selon la revendication 1, caractérisé par le fait que l'oxydohydroxyde de fer (III), muni d'un revêtement superficiel stabilisant la forme, est, avant la réduction, deshydraté et recuit pendant 1 à 6 heures à des températures entre 430 et 680°C.